# EUROPÄISCHE PATENTSCHRIFT

(11) **EP 0 855 690 B1**
(45) Veröffentlichungstag und Bekanntmachung des Hinweises auf die Patenterteilung: **08.03.2000**
(21) Anmeldenummer: 97113716.1
(22) Anmeldetag: 08.08.1997
(51) Int. Cl.: G09F 15/00

(54) **Vorrichtung für Reklamezwecke**
Device for advertising purpose
Dispositif pour présentation publicitaire

(30) Priorität: 22.01.1997 DE 29701055 U
(43) Veröffentlichungstag der Anmeldung: 29.07.1998
(73) Patentinhaber: Brandenburg, Rainer, 24376 Kappeln/Schlei (DE)
(72) Erfinder: Brandenburg, Rainer, 24376 Kappeln/Schlei (DE)
(74) Vertreter: Happe, Otto, Dipl.-Ing.

(56) Entgegenhaltungen:
- EP-A- 0 081 603
- WO-A-81/03215
- WO-A-94/14150
- DE-C- 476 300
- DE-U- 9 404 275
- US-A- 3 844 057
- PATENT ABSTRACTS OF JAPAN vol. 96, no. 9, 30.September 1996 & JP 08 137420 A (NIPPON ELECTRIC IND CO LTD), 31.Mai 1996,

## Beschreibung

Die Erfindung betrifft eine Vorrichtung für Reklamezwecke, die einen Basiskörper, eine Beleuchtungseinrichtung, eine Windkraftanlage mit vertikalachsigem Rotor und eine Solaranlage mit Solarzellen für die Umwandlung von Sonnenenergie in elektrische Energie aufweist, wobei der Rotor der Windkraftanlage zumindest teilweise als Werbefläche ausgebildet ist.

Reklamezwecken dienende Vorrichtungen, die aus einem Basiskörper mit daran angeordneten Werbeflächen bestehen, sind bekannt. Wegen der Höhe dieser Vorrichtungen sind die Werbeflächen zwar weithin sichtbar; doch ist der Werbeeffekt infolge der stillstehenden Werbeflächen verbesserungsbedürftig.

Es ist aber auch bereits eine als Werbeturm ausgebildete Vorrichtung für Reklamezwecke bekannt, bei der ein Drehkörper vorgesehen ist, der mit einer Werbefläche versehen sein kann (JP-A-8 137 420). Durch den rotierenden Drehkörper wird der Werbeeffekt wesentlich verbessert. Eine weitere Verbesserung des Werbeeffektes wird durch eine Beleuchtungseinrichtung erzielt. Ein besonderer Vorteil dieses bekannten Werbeturms besteht darin, daß der Drehkörper einen vertikalachsigen Rotor einer Windkraftanlage bildet und daß eine Solaranlage mit Solarzellen für die Umwandlung von Sonnenenergie in elektrische Energie vorgesehen ist. Dadurch kann der Werbeturm betrieben werden, ohne daß hierzu nicht erneuerbare Energien erforderlich sind.

Der Erfindung liegt die Aufgabe zugrunde, die vorgenannte bekannte Vorrichtung für Reklamezwecke derart zu verbessern, daß deren Werbeeffekt noch wesentlich größer ist, wobei auch hierbei keine nicht erneuerbaren Energien erforderlich sein sollen.

Die Lösung der gestellten Aufgabe besteht bei einer Vorrichtung für Reklamezwecke der eingangs genannten Art darin,
- daß an dem Basiskörper Werbeflächen vorgesehen sind,
- daß die Solaranlage mit Solarzellen an dem Basiskörper unbeweglich befestigt ist
- und daß die Beleuchtungseinrichtung, die von dem von der Windkraftanlage und der Solaranlage erzeugten Strom gespeist wird, auf die Werbeflächen gerichtet ist.

Bei der erfindungsgemäßen Vorrichtung werden die auf dem Rotor der Windkraftanlage befindlichen Werbeflächen bewegt, während diese und auch die an dem Basiskörper vorgesehenen Werbeflächen gleichzeitig mittels der Beleuchtungseinrichtung beleuchtet werden können. Die sich drehenden und/oder von der Beleuchtungseinrichtung beleuchteten Werbeflächen der erfindungsgemäßen Vorrichtung ziehen die Aufmerksamkeit in sehr viel größerem Maße auf sich und sind daher wesentlich wirksamer als die Werbeflächen des bekannten Werbeturms.

Bei einer bevorzugten Ausführungsform der erfindungsgemäßen Vorrichtung
- besteht der Basiskörper aus einem Mast,
- ist der Rotor der Windkraftanlage am oberen Ende des ortsfest errichteten Mastes drehbar gelagert
- und treibt die Windkraftanlage einen im oberen Bereich des Mastes befestigten Generator an.

Der Basiskörper kann auch ein beliebiges anderes hohes Bauwerk sein, beispielsweise ein Turm, ein Silo, ein Wohngebäude; aber auch eine Plakatwand, eine Tanksäule oder das Gebäude einer Bushaltestelle. Dadurch ist gewährleistet, daß die erfindungsgemäße Vorrichtung gut sichtbar ist.

In Ausgestaltung der Erfindung bilden die Solarzellen ein an dem Basiskörper befestigtes Dach. Dadurch wird ein überdachter Raum geschaffen, der vielseitig verwendet werden kann.

In weiterer Ausgestaltung der Erfindung speist der von der Solaranlage erzeugte Strom mindestens einen weiteren elektrischen Verbraucher, der auf einer von den Solarzellen überdachten Verkehrsfläche zugänglich angeordnet ist. Die weiteren elektrischen Verbraucher können strombetriebene Spiele und Vergnügungseinrichtungen, Audiound Phonogeräte, Kochstellen von Imbißständen und/oder Versorgungsstationen für Kraftfahrzeuge umfassen.

Die erfindungsgemäße Vorrichtung eignet sich beispielsweise besonders für große Verbrauchermärkte. Hier stehen Parkplätze zur Verfügung, auf denen sich zuweilen Verkaufsstände, Imbißstuben, Stände mit Spiel- und Vergnügungseinrichtungen und Kinderkarussells ansiedeln. Auch findet man Versorgungsstationen für Kraftfahrzeuge, Münzautomaten mit Einrichtungen für einen Ölwechsel und Saugeinrichtungen für die Fahrzeugpflege vor. Eine Überdachung der so genutzten Verkehrsflächen ist wünschenswert. Ferner muß auch eine Energieversorgung der auf den Verkehrsflächen vorgesehenen elektrischen Verbraucher gewährleistet sein.

Die erfindungsgemäße Vorrichtung kann noch dadurch verbessert werden, daß die Solarzellen unterhalb des Rotors auf einer schräg verlaufenden, an den Arbeitsbereich des Rotors umfangsseitig anschließenden Fläche angeordnet sind. Die schräge Ausrichtung der Solarzellen kann hierbei an die mittlere Sonneneinstrahlung angepaßt werden.

In Weiterbildung der Erfindung weist die Beleuchtungseinrichtung Strahler, Leuchtpaneele und/oder laseroptische Geräte auf. Diese Einrichtungen, insbesondere Leuchtpaneele, ermöglichen die Darstellung von sich ändernden Informationen.

Die Werbewirksamkeit der erfindungsgemäßen Vorrichtung kann noch dadurch verbessert werden, daß der Basiskörper auf einem Fahrzeug angeordnet oder als Fahrzeug ausgebildet ist. Dies ermöglicht einen leichten Ortswechsel der Vorrichtung. Auch die durch die Bewegung des Fahrzeugs benötigte Energie kann durch die Windkraftanlage und/oder die Solaranlage bewirkt werden.

Eine weitere Verbesserung der Werbewirksamkeit der erfindungsgemäßen Vorrichtung kann dadurch herbeigeführt werden, daß das Fahrzeug und/oder Teile davon die Form der beworbenen Ware aufweisen.

Das Fahrzeug der erfindungsgemäßen Vorrichtung kann auch einen mit Beleuchtungseinrichtungen versehenen Verkaufsstand aufweisend. Dabei kann der Verkaufsstand mit mindestens einem Duftsprüher ausgerüstet sein. Der durch die Duftsprüher versprühte Duft kann dem Duft der beworbenen Ware entsprechen und dadurch den Kunden - infolge einer Steigerung der Werbewirkung der erfindungsgemäßen Vorrichtung - zum Kauf der Ware anregen.

Die Erfindung ist anhand der Zeichnung, die ein Ausführungsbeispiele darstellt, näher erläutert. Es zeigen:
- Fig. 1: eine erfindungsgemäße Vorrichtung in Seitenansicht;
- Fig. 2: eine Draufsicht auf die in Fig. 1 dargestellte Vorrichtung.

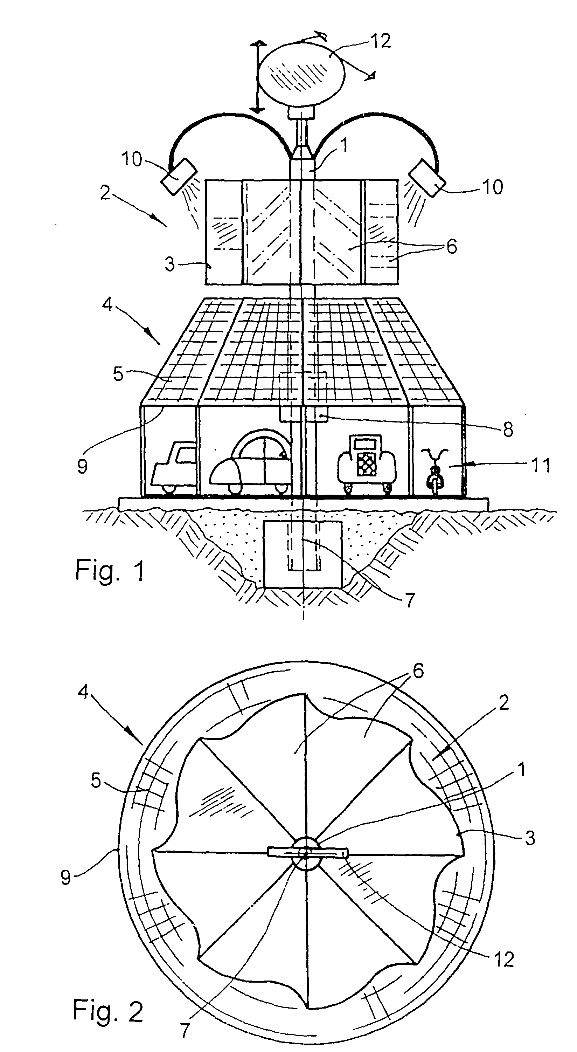

Die in den Fig. 1 und 2 dargestellte Vorrichtung besteht in ihrem grundsätzlichen Aufbau aus einem Basiskörper 1, einer Windkraftanlage 2 mit einem vertikalachsigen Rotor 3 und einer Solaranlage 4 mit Solarzellen 5 für die Umwandlung von Sonnenenergie in elektrische Energie. Der Rotor 3 der Windkraftanlage 2, dessen sichtbare Flächen als Werbeflächen 6 gestaltet sind, ist am oberen Ende des Basiskörpers 1 angeordnet. Bei dem in den Fig. 1 und 2 dargestellten Ausführungsbeispiel besteht der Basiskörper 1 aus einem Mast, während der Rotor 3 aus einem Zylinder mit einer geeigneten außenseitigen Beschaufelung besteht. Auch andere Bauformen an sich bekannter vertikalachsiger Rotoren sind einsetzbar.

Die Rotorachse 7 ist am oberen Ende des ortsfest errichteten Basiskörpers 1 drehbar gelagert und treibt einen am Basiskörper 1 befestigten Generator 8 an. Der Generator 8 ist vorzugsweise im Bereich des nachfolgend erläuterten Daches 9 angeordnet.

Den Fig. 1 und 2 ist zu entnehmen, daß die Solarzellen 5 ein an dem Basiskörper 1 befestigtes Dach 9 bilden. Sie sind auf einer schräg angeordneten, an den Arbeitsbereich des Rotors 3 umfangsseitig anschließenden Fläche angeordnet. Die schräge Ausrichtung der Solarzellen 4 ist an die mittlere Sonneneinstrahlung angepaßt.

Der von der Windkraftanlage 2 und der Solaranlage 4 erzeugte Strom speist einen Drehantrieb eines vorzugsweise an der Spitze des Basiskörpers 1 angeordneten Reklameschildes 12, eine Beleuchtungseinrichtung 10 für die Werbeflächen 6 sowie mindestens einen weiteren elektrischen Verbraucher 11, der auf einer von den Solarzellen 5 überdachten Verkehrsfläche zugänglich angeordnet ist. Bei dem dargestellten Ausführungsbeispiel besteht die Beleuchtungseinrichtung 10 aus Strahlern, die auf die Werbefläche 6 gerichtet sind. Es versteht sich, daß auch Leuchtpaneele mit einer Darstellung von sich ändernden Informationen, z.B. Leuchtröhren und laseroptische Geräte als werbewirksame Beleuchtungseinrichtungen einsetzbar sind. Als Verbraucher 11 ist bei dem dargestellten Ausführungsbeispiel ein Kinderkarussell mit einer um den Basiskörper 1 rotierenden Drehscheibe dargestellt. Es können - sofern die Stromversorgung ausreicht - auch beliebig andere Verbraucher auf der von den Solarzellen 5 überdachten Verkehrsfläche angeordnet sein. In Betracht kommen beispielsweise strombetriebene Spiele und Vergnügungseinrichtungen, Audio- und Phonogeräte, Kochstellen von Imbißstuben und Versorgungsstationen für Kraftfahrzeuge.

## Patentansprüche

1. Vorrichtung für Reklamezwecke, die einen Basiskörper (1), eine Beleuchtungseinrichtung (10), eine Windkraftanlage mit vertikalachsigem Rotor (3) und eine Solaranlage (4) mit Solarzellen (5) für die Umwandlung von Sonnenenergie in elektrische Energie aufweist, wobei der Rotor (3) der Windkraftanlage zumindest teilweise als Werbefläche ausgebildet ist, **dadurch gekennzeichnet,**
1.1 daß an dem Basiskörper (1) Werbeflächen vorgesehen sind,
1.2 daß die Solaranlage (4) mit Solarzellen (5) an dem Basiskörper (1) unbeweglich befestigt ist
1.3 und daß die Beleuchtungseinrichtung (10), die von dem von der Windkraftanlage (2) und der Solaranlage (4) erzeugten Strom gespeist wird, auf die Werbeflächen gerichtet ist.

2. Vorrichtung nach Anspruch 1, dadurch gekennzeichnet,
2.1 daß der Basiskörper (1) aus einem Mast besteht,
2.2 daß der Rotor (3) der Windkraftanlage (2) am oberen Ende des ortsfest errichteten Mastes drehbar gelagert ist
2.3 und daß die Windkraftanlage (2) einen im oberen Bereich des Mastes befestigten Generator (8) antreibt.

3. Vorrichtung nach Anspruch 1 oder 2, dadurch gekennzeichnet, daß die Solarzellen (5) ein an dem Basiskörper (1) befestigtes Dach (9) bilden.

4. Vorrichtung nach Anspruch 1, 2 oder 3, dadurch gekennzeichnet, daß der von der Solaranlage (4) erzeugte Strom mindestens einen weiteren elektrischen Verbraucher (11) speist, der auf einer von den Solarzellen (5) überdachten Verkehrsfläche angeordnet ist.

5. Vorrichtung nach einem der Ansprüche 1 bis 4, dadurch gekennzeichnet, daß die Solarzellen (5) unterhalb des Rotors (3) auf einer schräg verlaufenden, an den Arbeitsbereich des Rotors (3) umfangsseitig anschließenden Fläche angeordnet sind.

6. Vorrichtung nach einem der Ansprüche 1 bis 5, dadurch gekennzeichnet, daß die Beleuchtungseinrichtung (10) Strahler, Leuchtpaneele und/oder laseroptische Geräte aufweist.

7. Vorrichtung nach einem der Ansprüche 1 bis 6, dadurch gekennzeichnet, daß der Basiskörper (1) auf einem Fahrzeug (13) angeordnet oder als Fahrzeug (15) ausgebildet ist.

8. Vorrichtung nach Anspruch 7, dadurch gekennzeichnet, daß das Fahrzeug (15) und/oder Teile davon die Form der beworbenen Ware aufweisen.

9. Vorrichtung nach Anspruch 7 oder 8, dadurch gekennzeichnet, daß das Fahrzeug (15) einen mit Beleuchtungseinrichtungen (17) versehenen Verkaufsstand (16) aufweist.

10. Vorrichtung nach Anspruch 9, dadurch gekennzeichnet, daß der Verkaufsstand (16) mit mindestens einem Duftsprüher (18) ausgerüstet ist.

## Claims

1. Device for advertising purposes, which comprises a base body (1), an illuminating equipment (10), a wind force installation with a vertical axis rotor (3) and a solar installation (4) with solar cells (5) for the conversion of solar energy into electrical energy, wherein the rotor (3) of the wind force installation is constructed at least partly as an advertising surface, characterised in that
1.1 advertising surfaces are provided at the base body (1),
1.2 the solar installation (4) with solar cells (5) is immovably fastened to the base body (1) and
1.3 the illuminating equipment (10), which is supplied by the current generated by the wind force installation (2) and the solar installation (4), is directed to the advertising surfaces.

2. Device according to claim 1, characterised in that
2.1 the base body (1) consists of a mast,
2.2 the rotor (3) of the wind force installation (2) is rotatably mounted at the upper end of the mast erected in a stationary location and
2.3 the wind force installation (2) drives a generator (8) fastened in the upper region of the mast.

3. Device according to claim 1 or 2, characterised in that the solar cells (5) form a roof (9) fastened to the base body (1).

4. Device according to claim 1, 2 or 3, characterised in that the current generated by the solar installation (4) supplies at least one further electrical consumer, which is arranged on a traffic surface roofed-over by the solar cells (5).

5. Device according to one of claims 1 to 4, characterised in that the solar cells (5) are arranged below the rotor (3) on a obliquely extending surface circumferentially adjoining the working region of the rotor (3).

6. Device according to one of claims 1 to 5, characterised in that the illuminating equipment (10) comprises radiators, luminescent panels and/or laser-optical apparatus.

7. Device according to one of claims 1 to 6, characterised in that the base body (1) is arranged on a vehicle (13) or constructed as a vehicle (15).

8. Device according to claim 7, characterised in that the vehicle (15) and/or parts thereof have the shape of the promoted products.

9. Device according to claim 7 or 8, characterised in that the vehicle (15) comprises a sales stand (16) provided with illuminating devices (17).

10. Device according to claim 9, characterised in that the sales stand (16) is equipped with at least one scent sprayer (18).

## Revendications

1. Dispositif publicitaire, qui présente un corps de base (1), une installation d'éclairage (10), une installation éolienne comportant un rotor (3) à axe vertical et une installation solaire (4) comportant des cellules solaires (5) pour la conversion d'énergie solaire en énergie électrique, dans lequel le rotor (3) de l'installation éolienne est configuré au moins en partie comme surface publicitaire,
caractérisé,
1.1 en ce que des surfaces publicitaires sont prévues sur le corps de base (1)
1.2 en ce que l'installation solaire (4) dotée de cellules solaires (5) est fixée de manière non mobile sur le corps de base (1),
1.3 et en ce que le dispositif d'éclairage (10) qui est alimenté par le courant produit par l'installation éolienne (2) et l'installation solaire (4) est dirigé vers les surfaces publicitaires.

2. Dispositif selon la revendication 1, caractérisé
2.1 en ce que le corps de base (1) est constitué d'un mât,
2.2 en ce que le rotor (3) de l'installation solaire (2) est monté à rotation à l'extrémité supérieure du mât fixe,
2.3 et en ce que l'installation solaire (2) entraîne un générateur (8) fixé dans la zone supérieure du mât.

3. Dispositif selon la revendication 1 ou 2, caractérisé en ce que les cellules solaires (5) forment un toit (9) fixé au corps de base (1).

4. Dispositif selon les revendications 1, 2 ou 3 caractérisé en ce que le courant produit par l'installation solaire (4) alimente au moins un autre consommateur électrique (11) qui est disposé sur une surface de trafic recouverte par les cellules solaires (5).

5. Dispositif selon l'une des revendications 1 à 4, caractérisé en ce que les cellules solaires (5) sont disposées en dessous du rotor (3), sur une surface s'étendant obliquement, se raccordant à la périphérie de la zone d'action du rotor (3).

6. Dispositif selon l'une des revendications 1 à 5, caractérisé en ce que le dispositif d'éclairage (10) présente des projecteurs, des panneaux lumineux et/ou des appareils optiques à laser.

7. Dispositif selon l'une des revendications 1 à 6, caractérisé en ce que le corps de base (1) est disposé sur un véhicule (13) ou est configuré comme véhicule (15).

8. Dispositif selon la revendication 7, caractérisé en ce que le véhicule (15) et/ou des parties de ce dernier présentent la forme du produit dont la publicité est faite.

9. Dispositif selon la revendication 7 ou 8, caractérisé en ce que le véhicule (15) présente un poste de vente (16) doté de dispositifs d'éclairage (17).

10. Dispositif selon la revendication 9, caractérisé en ce que le poste de vente (16) est équipé d'au moins un pulvérisateur de parfum (18).
